# EUROPEAN PATENT APPLICATION

(11) **EP 2 590 116 A2**
(43) Date of publication of application: **08.05.2013**
(21) Application number: 12190913.9
(22) Date of filing: 31.10.2012
(51) Int. Cl.: G06Q 10/00

(54) **Methods and apparatus for determining a location of a component**

(30) Priority: 03.11.2011 US 201113288792
(71) Applicant: General Electric Company, Schenectady, NY 12345 (US)
(72) Inventor: Rank, Brandon James, Minden, NV 89423 (US); Sexton , Daniel White, Niskayuna, NY 12309 (US)
(74) Representative: Picker, Madeline Margaret

(57) **Abstract**

A device 202 for use in determining a location of a component 102 of a system 100 includes a communication interface 208 configured to transmit at least one signal to the component, a display 218, and a processor 210 coupled to the communication interface and to the display. The processor is programmed to display a representation of the system on the display, display an expected location 304 of the component within the representation, and transmit the at least one signal to the component using the communication interface for use in determining an actual location of the component.

## Description

### BACKGROUND OF THE INVENTION

The present application relates generally to systems and, more particularly, to methods and apparatus for use in determining a location of a system component.

At least some known power systems include a plurality of components, such as generators, motors, fans, and/or other components. The components are often stored or positioned within a building such as a power plant or a factory. The building may include a large number of components such that a user may have difficulty desired locating components and/or navigating to desired components. For example, a component may be positioned behind and/or obscured by another component such that the component is not easily seen.

Moreover, during the operation of the power system, components may be repositioned, removed, and/or relocated. Accordingly, a current location of a component may be difficult to identify and/or records indicating the current position of power system components may become inaccurate.

### BRIEF DESCRIPTION OF THE INVENTION

In one embodiment, a device for use in determining a location of a component of a system is provided that includes a communication interface configured to transmit at least one signal to the component, a display, and a processor coupled to the communication interface and to the display. The processor is programmed to display a representation of the system on the display, display an expected location of the component within the representation, and transmit the at least one signal to the component using the communication interface for use in determining an actual location of the component.

In another embodiment, a system is provided that includes a component and a mobile device. The mobile device includes a communication interface configured to transmit at least one signal to the component, a display, and a processor coupled to the communication interface and to the display. The processor is programmed to display a representation of the system on the display, display an expected location of the component within the representation, and transmit the at least one signal to the component using the communication interface for use in determining an actual location of the component.

In yet another embodiment, a method of determining a location of a component within a system is provided that includes displaying a representation of the system on a display and displaying an expected location of the component within the representation. The method also includes transmitting a first message to the component, receiving a second message from the component, and determining an actual location of the component based on the second message received from the component.

### BRIEF DESCRIPTION OF THE DRAWINGS

Fig. 1 is a block diagram of an example system.
Fig. 2 is a block diagram of an example mobile device and an example system component that may be used with the system shown in Fig. 1.
Fig. 3 is a block diagram of an example model of the system shown in Fig. 1.
Fig. 4 is a flow diagram of an example method for determining a location of a system component that may be used with the system shown in Fig. 1.

### DETAILED DESCRIPTION OF EMBODIMENTS OF THE INVENTION

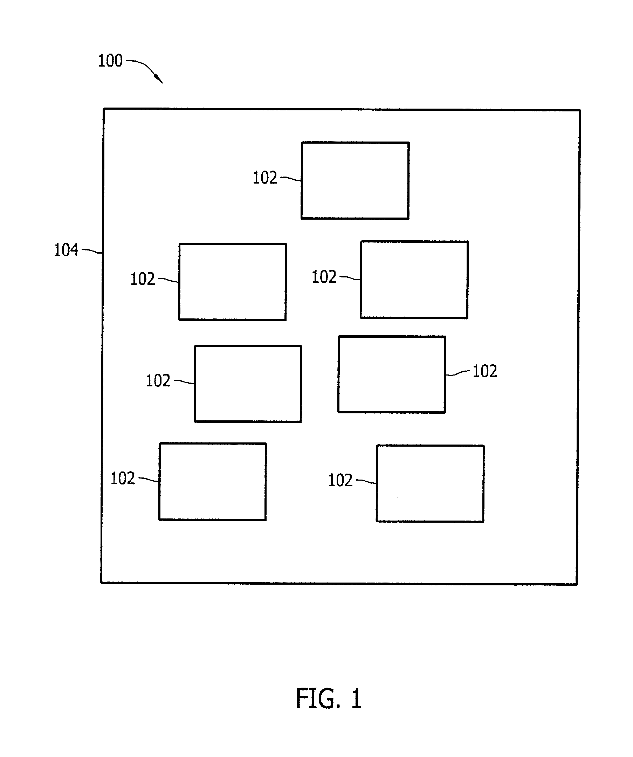

Fig. 1 is a block diagram of an example system 100 that includes a plurality of system components 102. In the example embodiment, system 100 may be or may include a factory, an industrial system or facility, a mill, a refinery, a manufacturing facility, a power generation plant or facility, and/or any other system that includes a plurality of system components 102. System components 102 may include, but are not limited to only including, machines, motors, generators, pumps, fans, computer systems or devices, sensors, and/or any other device or component that enables system 100 to function as described herein. In the example embodiment, system components 102 are positioned within a building 104 or another structure or location.

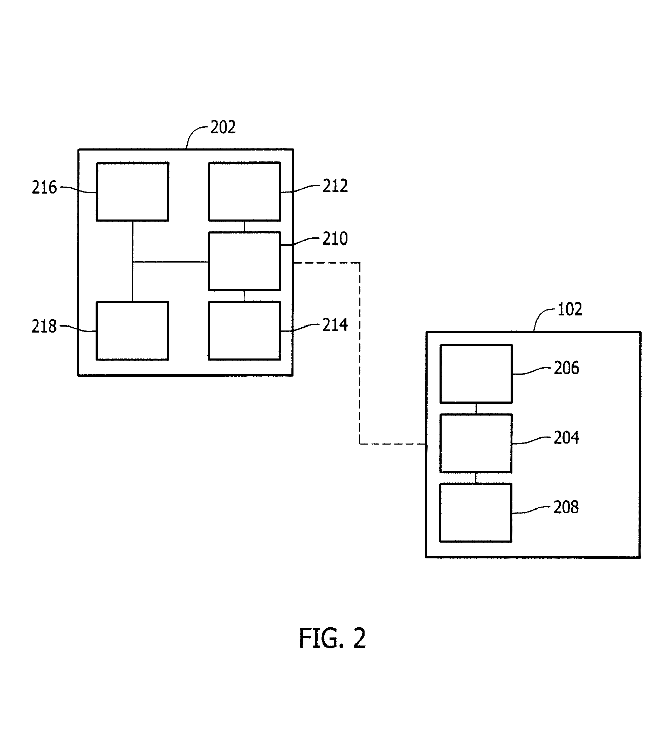

Fig. 2 is a block diagram of an example mobile device 202 and an example system component 102 that may be used with system 100 (shown in Fig. 1). In the example embodiment, mobile device 202 is a laptop, a smartphone, a personal digital assistant (PDA), a tablet computer, and/or any other device that functions as described herein. Mobile device 202, in the example embodiment, is used to facilitate determining a location of a component, such as system component 102.

In the example embodiment, system component 102 includes a processor 204 coupled to a memory device 206 and to a communication interface 208. Processor 204 controls the operation of communication interface 208 based on instructions stored within memory device 206 and/or based on data and/or input received from communication interface 208.

Processor 204 includes any suitable programmable circuit including one or more systems and microcontrollers, microprocessors, reduced instruction set circuits (RISC), application specific integrated circuits (ASIC), programmable logic circuits (PLC), field programmable gate arrays (FPGA), and any other circuit capable of executing the functions described herein. The above represent examples only, and thus are not intended to limit in any way the definition and/or meaning of the term "processor."

Memory device 206 includes a computer readable storage medium, such as, without limitation, random access memory (RAM), flash memory, a hard disk drive, a solid state drive, a diskette, a flash drive, a compact disc, a digital video disc, and/or any suitable memory. In the example embodiment, memory device 206 includes data and/or instructions that are executable by processor 204 (i.e., processor 204 is programmed by the instructions) to enable processor 204 to perform the functions described herein.

Communication interface 208 may include, without limitation, a network interface controller (NIC), a network adapter, a transceiver, or any other communication interface or device that enables mobile device 202 to operate as described herein. In the example embodiment, communication interface 208 includes a radio frequency (RF) transceiver. Moreover, communication interface 208 may connect to mobile device 202 using any suitable network and/or communication protocol.

In the example embodiment, mobile device 202 includes a processor 210 coupled to a memory device 212, a communication interface 214, a user interface 216, and a display 218. Processor 210 controls the operation of mobile device 202 based on instructions stored within memory device 212 and/or based on data and/or input received from user interface 216 and/or communication interface 214.

Processor 210 includes any suitable programmable circuit including one or more systems and microcontrollers, microprocessors, reduced instruction set circuits (RISC), application specific integrated circuits (ASIC), programmable logic circuits (PLC), field programmable gate arrays (FPGA), and any other circuit capable of executing the functions described herein. The above represent examples only, and thus are not intended to limit in any way the definition and/or meaning of the term "processor."

Memory device 212 includes a computer readable storage medium, such as, without limitation, random access memory (RAM), flash memory, a hard disk drive, a solid state drive, a diskette, a flash drive, a compact disc, a digital video disc, and/or any suitable memory. In the example embodiment, memory device 212 includes data and/or instructions that are executable by processor 210 (i.e., processor 210 is programmed by the instructions) to enable processor 210 to perform the functions described herein.

Communication interface 214 may include, without limitation, a network interface controller (NIC), a network adapter, a transceiver, or any other communication interface or device that enables mobile device 202 to operate as described herein. In the example embodiment, communication interface 214 includes a radio frequency (RF) transceiver. Moreover, communication interface 214 may connect to system components 102 using any suitable network and/or communication protocol.

User interface 216 includes, without limitation, a keyboard, a keypad, a touch-sensitive screen, a mouse, a scroll wheel, a pointing device, an audio input device employing speech-recognition software, and/or any suitable interface and/or device that enables a user to input data into mobile device 202 and/or retrieve data from mobile device 202.

Display 218 includes, without limitation, a liquid crystal display (LCD), a vacuum fluorescent display (VFD), a cathode ray tube (CRT), a plasma display, a light-emitting diode (LED) display, one or more LEDs, and/or any suitable visual output device capable of displaying graphical data and text to a user. In one embodiment, display 218 may be a touch-sensitive screen that incorporates aspects of user interface 216, for example, by enabling a user to input data and/or commands through the screen.

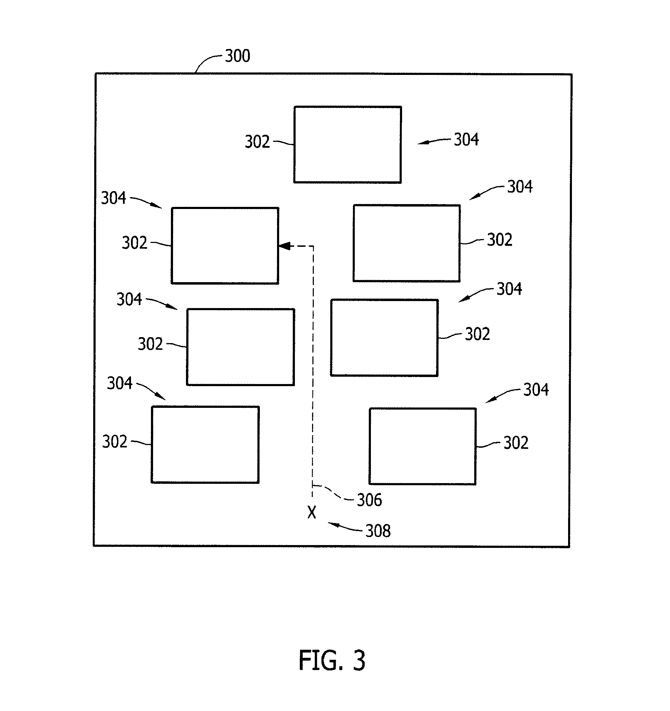

Fig. 3 is a block diagram of an example graphical representation 300, or model 300, of a system, such as system 100 (shown in Fig. 1). In the example embodiment, model 300 is stored and/or displayed within mobile device 202 (shown in Fig. 2). Alternatively, model 300 may be stored within, and/or displayed by, at least one device or system remote from mobile device 202.

In the example embodiment, model 300 displays a representation or image (hereinafter referred to as a "component image 302") of at least one system component 102 (shown in Fig. 1) on display 218. More specifically, model 300 displays an expected location 304 or position of each system component 102 within model 300, for example, by positioning each component image 302 within model 300 at a location 304 corresponding to system component 102 associated with component image 302. Accordingly, a position of each component image 302 within model 300 corresponds to a position, within system 100 and/or building 104 (shown in Fig. 1), of each system component 102 associated with, or represented by, component image 302. In the example embodiment, model 300 may be represented as a two-dimensional display or as a three-dimensional display of component images 302 and/or system 100.

In the example embodiment, model 300 is generated by mapping each system component 102 with a physical location. For example, a user may use a global positioning satellite (GPS) enabled camera and/or another device to identify a physical location of system component 102, and automatically and/or manually associate the physical location of system component 102 with an associated component image 302 within model 300. In addition, details of system component 102, such as operating conditions, process parameters, a status of component 102, and/or any other details may be associated with component image 302. The details of each system component 102 may be accessed and/or displayed by selecting the associated component image 302 within model 300. However, as system components 102 may be moved after model 300 has been generated, the location 304 or position of each system component 102 represented by component images 302 within model 300 is referred to as an expected location 304 or position.

Moreover, in the example embodiment, processor 210 and/or another device determines a route 306 or path to a system component 102 and displays route 306 on model 300. For example, processor 210 determines a location 308 of the user and/or mobile device 202 and a location 304 of a system component 102 associated with a selected component image 302 using model 300. Processor 210 also determines a location 304 of other system components 102 within system 100 and determines one or more routes 304 from the user location 308 to the system component location 304 based on the locations of the other system components 102 (e.g., to avoid or navigate around system components 102). Moreover, processor 210 determines (e.g., continuously determines) a direction and/or a distance to the selected system component 102 and displays the direction and/or distance within model 300. Processor 210 updates route 306, the direction, and/or the distance continuously or at a predetermined frequency.

If processor 210 determines that the user is within a predetermined distance of the selected system component 102 and/or if the user selects an option using mobile device 202, mobile device 202 uses a different, or second, methodology (i.e., other than using model 300) to further determine the location, e.g., the actual location, of the selected system component 102. More specifically, in the example embodiment, processor 210 determines the actual location of a selected system component 102 by transmitting at least one signal or message to system component 102 and receiving at least one signal or message from the selected system component 102 in response to the transmitted signal or message as is more fully described below. As used herein, the term "actual location" does not imply an infinite degree of accuracy or precision, but rather refers to the physical location of a component as it is currently positioned within a system. In contrast, the expected position of a component refers to a location of the component as identified at a prior time, and/or a virtual representation of the prior identified location of the component.

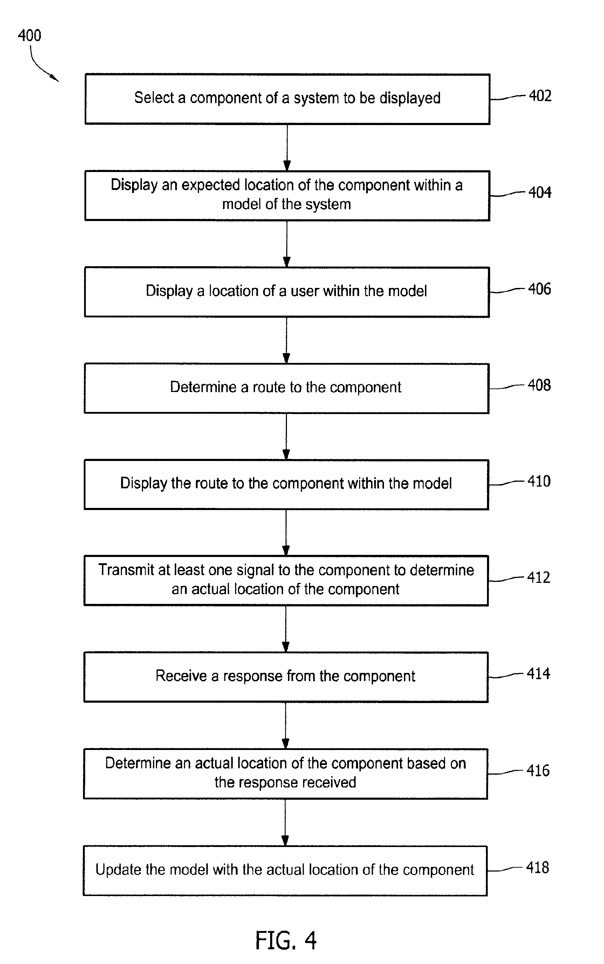

Fig. 4 is a flow diagram of an example method 400 for determining a location of a component of a system, such as a system component 102 of system 100 (both shown in Fig. 1). In the example embodiment, method 400 is embodied within a plurality of computer-executable instructions stored within memory device 212 of mobile device 202 (both shown in Fig. 2), and is executed by processor 210 (shown in Fig. 2) of mobile device 202.

In the example embodiment, method 400 includes selecting 402 a component of a system to be displayed. More specifically, a system component 102 and/or a component image 302 (shown in Fig. 3) associated with system component 102 is selected 402 by processor 210, by a user, and/or by another device based on the occurrence of a predetermined condition and/or based on input received from user interface 216 and/or communication interface 214.

An expected location 304 (shown in Fig. 3) of system component 102 is displayed 404 within a representation, or model 300 (shown in Fig. 3), of system 100. More specifically, model 300 displays 404 the expected location 304 of the selected system component 102 by displaying component image 302 associated with system component 102.

In the example embodiment, a location 308 of the user and/or of mobile device 202 is displayed 406 within model 300. A route 306 (shown in Fig. 3) or path to system component 102 is determined 408 by processor 210 and is displayed 410 within model 300.

At least one signal or message is transmitted 412 to system component 102 to facilitate determining an actual location of the component. More specifically, in the example embodiment, processor 210 generates a message for system component 102 that includes a sequence value, a time-variant "number used once" (nonce) value or a random value, and a message integrity value. Moreover, in one embodiment, the message may include a device-specific value that corresponds to, or is associated with, the selected system component 102. In the example embodiment, mobile device 202 continuously or periodically transmits 412 a message to system component 102, and the transmitted message changes each time a new message is transmitted 412 such that each message is different from previously transmitted messages.

In the example embodiment, the sequence value is incremented each time that the message is transmitted, and/or is incremented periodically, such as about every second or at any other frequency that enables method 400 to function as described herein. The nonce value and/or the random value may include a true random number and/or a pseudorandom number that is generated by a suitable algorithm or device and that changes each time a new message is transmitted. The message integrity value is a checksum or another value used to determine whether the message has been modified or corrupted during transmission. The device-specific value is a value, such as a device identification (ID) value, that is unique to other system components 102 within system 100. In the example embodiment, processor 210 encrypts the message using, for example, a public cryptographic key that is shared with the selected system component 102 and transmits the encrypted message to system component 102. In one embodiment, a second checksum or message integrity value is calculated for the encrypted message and is appended to the message.

In one embodiment, system component 102 and/or communication interface 208 (shown in Fig. 2) of system component 102 alternates between a low power state and a state in which communication interface 208 is able to receive messages. If system component 102 (i.e., communication interface 208) receives the encrypted message from mobile device 202, processor 204 of system component 102 calculates a checksum value (or a corresponding message integrity value) of the message and compares the checksum value to the checksum value appended to the encrypted message. If the calculated checksum value (or message integrity value) is equal to the transmitted checksum value, processor 204 decrypts the message using the public key shared with mobile device 202. Processor 204 verifies the integrity of the received message by calculating a message integrity value (e.g., a checksum) of the decrypted message and comparing the calculated message integrity value with the message integrity value included within the decrypted message received. If the calculated message integrity value is equal to the received message integrity value, processor 204 determines that the received message is unmodified and/or verified. Alternatively or additionally, a length of the transmitted message may be modified (e.g., data may be added to the message) based on a type or characteristic of system component 102 such that different lengths of messages may be transmitted to different groups or types of components 102. Accordingly, in one embodiment, processor 204 verifies that the length of the message received is equal to an expected length associated with system component 102 before decrypting the message. Moreover, unique identification data and/or a unique address may be appended to the encrypted message before the message is transmitted to enable processor 204 to filter out and/or ignore messages that are intended for recipients other than system component 102.

Moreover, a counter or sequence value is stored within memory device 206 of system component 102. Processor 204 compares the received sequence number with the sequence number stored in memory device 206. If the received sequence number is greater than the stored sequence number, processor 204 determines that the received message is valid. However, if the received sequence number is less than, or equal to, the stored sequence number, processor 204 determines that the received message is invalid and ignores and/or discards the received message. Moreover, nonce value and/or a random value is stored in memory device 206 from the most recent prior message received. Processor 204 compares the received nonce value and/or random value with the stored nonce value and/or random value. If the received nonce and/or random value is different from the stored nonce and/or value, processor 204 determines that the received message is valid. However, if the received nonce and/or random value is equal to the stored nonce and/or random value, processor 204 determines that the received message is invalid and ignores and/or discards the received message. Accordingly, processor 204 facilitates preventing previously transmitted messages from being improperly used with system component 102.

If the received message includes a device-specific value, processor 204 compares the device-specific value with a device identification value and/or another device-specific value stored in memory device 206. If the received device-specific value is equal to the stored device-specific value, processor 204 determines that system component 102 is the proper recipient of the received message. However, if the received device-specific value is different from the stored device-specific value, processor 204 determines that system component 102 is not the proper recipient of the received message and ignores and/or discards the message.

If processor 204 verifies the message integrity value, the sequence value, the nonce value and/or the random value, and the device-specific value (if included), processor 204 causes communication interface 208 to transmit a response message to mobile device 202. In the example embodiment, the response message is representative of an acknowledgement, by system component 102, that the message was received properly and that system component 102 is the proper recipient of the message. In one embodiment, upon verification of the received message, processor 204 of system component 102 continuously or periodically transmits the response message to mobile device 202 such that the response message operates as a beacon for mobile device 202. Moreover, the response message may include a timestamp and/or GPS data to facilitate enabling mobile device 202 to locate and/or determine the location of system component 102. Processor 204 may also activate a light source and/or an audio source to generate a visual and/or audio beacon or notification to facilitate locating system component 102.

In the example embodiment, processor 210 of mobile device 202 receives 414 the response message from system component 102. Moreover, processor 210 determines 416 the actual location of system component 102 based on the response message received from system component 102. More specifically, processor 210 determines a direction and/or a distance to system component 102 based on the response message received. Processor 210 updates 418 model 300 with the actual location of system component 102 as determined by processor 210. In one embodiment, processor 210 updates the direction and/or distance to system component 102 within model 300. Additionally or alternatively, processor 210 may determine a new or updated route 306 to system component 102 based on the response message received.

A technical effect of the systems and method described herein includes at least one of (a) displaying a representation of a system on a display; (b) displaying an expected location of a component within a representation; (c) transmitting a first message to a component; (d) receiving a second message from a component; and (e) determining an actual location of a component based on a second message received from the component.

The mobile device and the system components described herein provide a robust and efficient system for determining a location of the system components. An expected location of each system component is entered into a model of the system and the model is displayed on the mobile device. If a user transports the mobile device within a predetermined distance of a selected system component and/or if the user selects an appropriate option of the mobile device, a message is transmitted by the mobile device to the system component. The message is encrypted and includes a sequence value, a nonce or random value, a message integrity value, and/or a device-specific value. The system component receives and decrypts the message. The system component then compares the values included within the received message with values stores within a memory device of the system component. If the received values are determined to be equal to the stored values and/or if the received values are otherwise validated by the system component, a response message is transmitted from the system component to the mobile device to enable the mobile device to determine the actual location of the system component. Accordingly, the mobile device and the system components enable a user to quickly and efficiently determine a location of system components.

Example embodiments of methods and apparatus for use in determining a location of a component are described above in detail. The methods and apparatus are not limited to the specific embodiments described herein, but rather, components of the apparatus and/or steps of the methods may be utilized independently and separately from other components and/or steps described herein. For example, the mobile device may also be used in combination with other systems and methods, and is not limited to practice with only the system as described herein. Rather, the example embodiment can be implemented and utilized in connection with many other applications.

Although specific features of various embodiments of the invention may be shown in some drawings and not in others, this is for convenience only. In accordance with the principles of the invention, any feature of a drawing may be referenced and/or claimed in combination with any feature of any other drawing.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

## Claims

1. A device (202) for use in determining a location of a component (102) of a system (100), said device comprising:
a communication interface (208) configured to transmit at least one signal to the component;
a display (218); and
a processor (210) coupled to said communication interface and to said display, said processor programmed to:
display a representation of the system on said display;
display an expected location of the component within the representation; and
transmit the at least one signal to the component using said communication interface for use in determining an actual location of the component.

2. A device (202) in accordance with Claim 1, wherein said communication interface (208) receives at least one signal from the component (102) in response to the at least one signal transmitted to the component.

3. A device (202) in accordance with Claim 2, wherein said processor (210) determines an actual location (304) based on the at least one signal received from the component (102).

4. A device (202) in accordance with Claim 2 or Claim 3, wherein said processor (210) determines at least one of a direction and a distance to the component (102) based on the at least one signal received from the component.

5. A device (202) in accordance with Claim 4, wherein said processor (210) displays at least one of the direction and the distance to the component (102) on said display (218).

6. A device (202) in accordance with any preceding Claim, wherein the at least one signal transmitted to the component (102) comprises a message comprising a sequence value.

7. A device (202) in accordance with any preceding Claim, wherein the at least one signal transmitted to the component (102) comprises a message comprising at least one of a nonce value and a random value.

8. A device (202) in accordance with any preceding Claim, wherein the at least one signal transmitted to the component (102) comprises a message that is encrypted using a cryptographic key that is shared with the component.

9. A system (100) comprising:
a component (102); and
a mobile device (202) comprising:
a communication interface (208) configured to transmit at least one signal to said component;
a display (218); and
a processor (210) coupled to said communication interface and to said display, said processor programmed to:
display a representation of the system on said display;
display an expected location (304) of said component within the representation; and
transmit the at least one signal to said component using said communication interface for use in determining an actual location of said component.

10. A system (100) in accordance with Claim 9, wherein said communication interface (208) receives at least one signal from said component (102) in response to the at least one signal transmitted to said component.
